# DEMANDE DE BREVET EUROPEEN

(11) **EP 2 101 081 A1**
(43) Date de publication de la demande: **16.09.2009**
(21) Numéro de dépôt: 08152755.8
(22) Date de dépôt: 14.03.2008
(51) Int. Cl.: F16G 11/00

(54) **Elément de verrouillage destiné à recevoir une corde ou un cable notamment**

(71) Demandeur: SUI 4616 sàrl, 1290 Versoix (CH)
(72) Inventeur: Rossier, Nicolas, 1290 Versoix (CH)
(74) Mandataire: Leman Consulting S.A.

(57) **Abrégé**

La présente invention concerne un élément de verrouillage destiné à recevoir au moins une corde ou un câble prévu pour subir une traction le long d'un axe longitudinal, cet élément de verrouillage étant caractérisé en ce qu'il comporte un corps (11) muni d'au moins un logement (12) agencé pour recevoir deux brins de la corde (17, 17') ou du câble selon un premier sens, ledit logement ayant un axe parallèle audit axe longitudinal, en ce que le logement (12) comporte une zone ouverte (15) débouchant sur une première face (13) de l'élément de verrouillage (10) de façon à permettre d'engager lesdits brins dans ledit logement (12) selon une direction perpendiculaire à l'axe du logement (18'), et en ce qu'il comporte au moins une seconde face (14) opposée à ladite première face (13), agencée pour recevoir deux brins de la corde (17, 17') ou du câble dans un second sens, opposé audit premier sens.

## Description

### DOMAINE TECHNIQUE

La présente invention concerne un élément de verrouillage destiné à recevoir une corde, un câble une sangle ou tout élément similaire pour fixer, maintenir ou déplacer un objet au moyen de cette corde ou ce câble.

### TECHNIQUE ANTERIEURE

Il existe actuellement des éléments de verrouillage destinés à recevoir des cordes ou des câbles notamment, ces éléments de verrouillage permettant de fixer la corde ou le câble autour d'un objet de façon à pouvoir le maintenir ou le déplacer. Le fait de réaliser un noeud sur une corde fait perdre à celle-ci une proportion considérable de sa résistance. Ainsi, lorsqu'il est prévu d'utiliser une corde avec un noeud pour fixer un objet ou exercer une traction, il est nécessaire de surdimensionner la corde afin que le noeud résiste aux efforts imposés.

Pour pallier ce problème, il existe des cordes ou des câbles comportant une boucle à leur extrémité, cette boucle étant réalisée lors de la fabrication de la corde ou du câble. Afin de pouvoir utiliser la boucle de la corde de façon optimale du point de vue mécanique, et simple du point de vue de la manipulation, il est nécessaire de prévoir un élément de verrouillage coopérant avec la boucle de la corde. De telles cordes et de tels éléments de verrouillage sont notamment utilisés dans le domaine du nautisme et en particulier sur les voiliers. Ils peuvent également être utilisés par exemple dans des dispositifs de levage, pour maintenir une charge à déplacer.

Un exemple d'un élément de verrouillage utilisé avec une corde comportant une boucle est décrit dans le brevet américain N° US 7,076,845. Ce brevet décrit un élément formé essentiellement d'un corps cylindrique ayant un axe longitudinal principal. Ce corps cylindrique est percé d'une fente ou de deux trous transversaux, ces trous ayant des axes longitudinaux perpendiculaires à l'axe principal de l'élément cylindrique.

Dans le mode de réalisation de l'élément de verrouillage comportant deux trous, étant donné que la corde comporte une boucle fermée réalisée lors de la fabrication de la corde, l'élément de verrouillage doit être mis en place sur la corde lors de la fabrication de celle-ci. Dans le cas où l'élément de verrouillage casse ou s'use, il ne peut pas être remplacé. Un autre inconvénient de ce type d'éléments de verrouillage vient du fait que la mise en place et la manutention de cet élément de verrouillage complique la fabrication de la corde et limite son utilisation. En particulier, si la corde doit être passée dans un orifice relativement petit, c'est-à-dire plus petit que l'élément de verrouillage, une telle corde ne peut pas être utilisée, puisque cet élément de verrouillage ne peut pas être séparé de la corde.

Dans le mode de réalisation de l'élément de verrouillage comportant une fente, cette fente doit être suffisamment grande pour permettre un passage facile de la corde ou du câble lorsqu'il est poussé à travers cette fente. Dans ce cas, l'élément de verrouillage peut facilement glisser de la corde et se perdre.

Aucun des modes de réalisation de cet élément de verrouillage n'est donc optimal.

Il existe d'autres éléments de verrouillage, par exemple formés d'une pièce cylindrique comportant des sillons périphériques. Une telle pièce ne peut pas être maintenue par la corde si cette corde n'est pas en tension, de sorte que cette pièce tombe facilement. Afin d'éviter ceci, la pièce est généralement attachée par une cordelette, ce qui rend sont utilisation peu pratique. Une telle pièce pourrait simplement être remplacée par une tige cylindrique, par exemple une goupille métallique.

### EXPOSE DE L'INVENTION

La présente invention se propose de pallier les inconvénients des éléments de verrouillage de l'art antérieur en réalisant un élément de verrouillage destiné à recevoir une corde ou un câble notamment, tel que cet élément puisse être aisément ajouté après la fabrication de la corde ou du câble, tout en assurant une bonne tenue sur la corde ou le câble.

Le but de l'invention est atteint par un élément de verrouillage destiné à recevoir au moins une corde ou un câble prévu pour subir une traction le long d'un axe longitudinal, cet élément de verrouillage étant **caractérisé en ce qu**'il comporte un corps muni d'au moins un logement agencé pour recevoir deux brins de la corde ou du câble selon un premier sens, ledit logement ayant un axe parallèle audit axe longitudinal, en ce que le logement comporte une zone ouverte débouchant sur une première face de l'élément de verrouillage de façon à permettre d'engager lesdits brins dans ledit logement selon une direction perpendiculaire à l'axe du logement, et en ce qu'il comporte au moins une seconde face opposée à ladite première face, agencée pour recevoir deux brins de la corde ou du câble dans un second sens, opposé audit premier sens.

Grâce à cette invention, un élément de verrouillage adapté peut être facilement mis en place sur une corde ou un câble, après la fabrication. De cette manière, il n'est pas nécessaire de surdimensionner la corde. En effet, l'utilisation d'un élément de verrouillage selon la présente invention évite l'utilisation d'un noeud qui fait perdre à la corde une grande partie de sa résistance mécanique. Ainsi, il est possible de choisir la corde adaptée à l'utilisation souhaitée, en sachant que l'élément de verrouillage entraînera uniquement une faible diminution de la résistance de cette corde.

Du point de vue de la fabrication, il est possible de fabriquer une corde avec une boucle de façon conventionnelle, en laissant la possibilité d'ajouter après fabrication, c'est-à-dire lorsque l'utilisation de la corde le rend nécessaire, un élément de verrouillage. II en résulte qu'il est également possible de remplacer un élément de verrouillage cassé ou usé par exemple. Les dimensions de l'élément de verrouillage peuvent être choisies de telle façon qu'il soit bien tenu sur la corde ou le câble et qu'il ne se perde pas facilement, tout en permettant une mise en place facile. La forme et la taille de cet élément de verrouillage sont également choisies de façon à optimiser l'encombrement et le poids de la pièce.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue de face d'un premier mode de réalisation de l'élément de verrouillage selon la présente invention;
- la figure 2 est une vue de dessus de l'élément de verrouillage de la figure 1;
- les figures 3 à 6 sont des vues de face de modes de réalisation particuliers de l'élément de verrouillage de l'invention;
- la figure 7 est une vue en perspective de l'élément de verrouillage de l'invention; et
- les figures 8 et 9 sont des vues en perspective de l'élément de verrouillage de l'invention, dans deux modes d'utilisation différents.

### MANIERE DE REALISER L'INVENTION

En référence aux figures, l'élément de verrouillage 10 selon la présente invention comporte essentiellement un corps 11 muni d'au moins un logement 12. Ce corps 11 comporte une première face 13 dans laquelle débouche le logement 12, ainsi qu'une seconde face 14 opposée à cette première face 13. La partie du logement débouchant sur la première face de l'élément de verrouillage définit une zone ouverte 15.

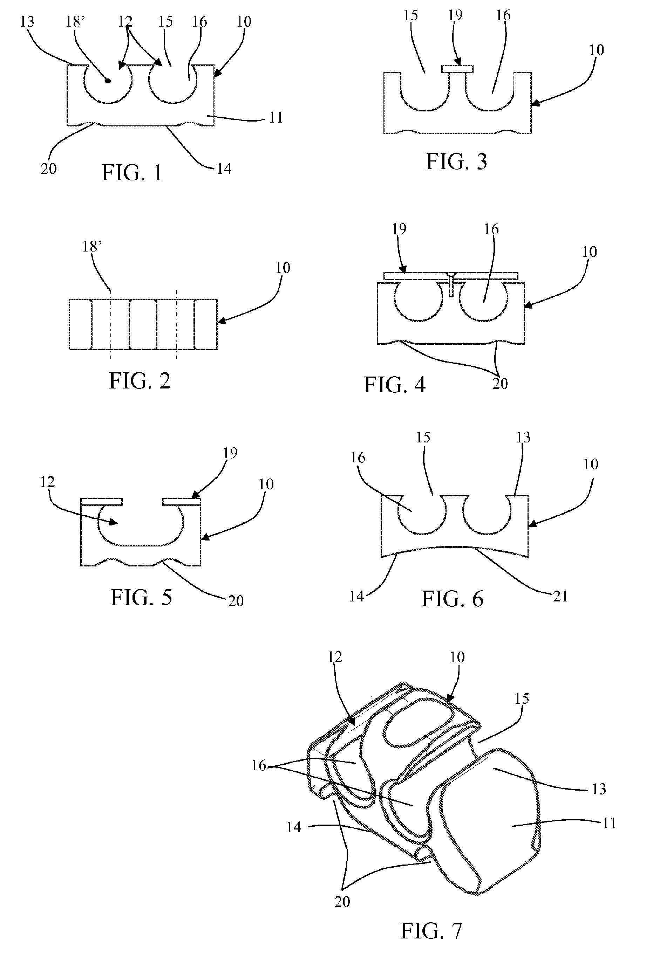

En référence aux modes de réalisation illustrés par les figures 1 à 4 et 6 à 8, le logement 12 est formé de deux gorges 16, chacune de ces gorges étant agencée pour recevoir un brin d'une corde 17 ou d'un câble. Ces brins s'étendent dans une première direction lorsque l'élément de verrouillage est utilisé. La corde est prévue pour subir une traction le long d'un axe longitudinal 18, cet axe longitudinal étant parallèle ou confondu avec un axe longitudinal 18' des gorges 16, ou de façon plus générale, du logement 12. La mise en place des brins de la corde se fait dans une direction perpendiculaire à l'axe longitudinal 18', par les zones ouvertes 15 des gorges. La zone ouverte a donc une dimension telle qu'il est possible d'introduire un brin de la corde.

Dans les modes de réalisation illustrés, les gorges 16 ont une section transversale en forme de portion de cercle. Dans les modes de réalisation illustrés par les figures 1, 2 et 4 à 7, la largeur de la zone ouverte 15 des gorges est inférieure à la largeur maximale de la section transversale de ces gorges. Grâce à ceci, lorsque la corde est introduite dans les gorges par leur zone ouverte, l'élément de verrouillage 10 peut coulisser le long de la corde, mais reste solidaire de cette corde et ne s'enlève pas facilement.

En référence à la figure 3, l'élément de verrouillage comporte également deux gorges 16 se terminant par une zone ouverte 15 débouchant sur la première face 13 de l'élément de verrouillage. Dans ce mode de réalisation toutefois, la largeur de la zone ouverte est sensiblement égale à la largeur maximale de la section transversale des gorges. Afin de s'assurer que la corde ne sorte pas facilement des gorges, l'élément de verrouillage 10 comporte en outre un élément de fermeture 19. Cet élément de fermeture peut par exemple être formé d'une matière élastique fixée de façon rigide entre les deux gorges 16. Il est également possible d'utiliser une matière rigide, l'essentiel étant que la corde ou le câble puisse être introduit dans les gorges.

Le mode de réalisation illustré par la figure 4 comporte également un élément de fermeture 19. Cet élément de fermeture est un mécanisme mobile, agencé de telle sorte que, dans une première position (non représentée), il permette un passage de la corde dans les gorges et, dans une seconde position telle qu'illustrée, il ferme les gorges 16. Ainsi, la corde peut facilement être mise en place tout en empêchant une sortie non volontaire de cette corde.

Dans le mode de réalisation de la figure 5, l'élément de verrouillage 10 de l'invention comporte une seule gorge 16, celle-ci étant suffisamment large pour recevoir deux brins de corde ou de câble. Comme dans le mode de réalisation de la figure 3, cet élément de verrouillage comporte un élément de fermeture 19, par exemple élastique, qui empêche une sortie non volontaire de la corde.

Dans les modes de réalisation illustrés par les figures 1 à 5 et 7 à 9, la seconde face 14 de l'élément de verrouillage de l'invention comporte deux échancrures 20 parallèles aux gorges, situées dans une zone sensiblement à l'opposé des zones ouvertes 15 des gorges.

Dans le mode de réalisation illustré par la figure 6, la seconde face 14 comporte une zone concave 21 de telle sorte qu'en traction, les brins de la corde prenant appui contre cette seconde face 14 sont contraints vers le milieu de la face, ce qui permet un bon maintien de l'élément de verrouillage sur la corde.

Selon une variante non représentée, il est possible de prévoir des échancrures 20 ayant une forme similaire ou identique aux gorges 16.

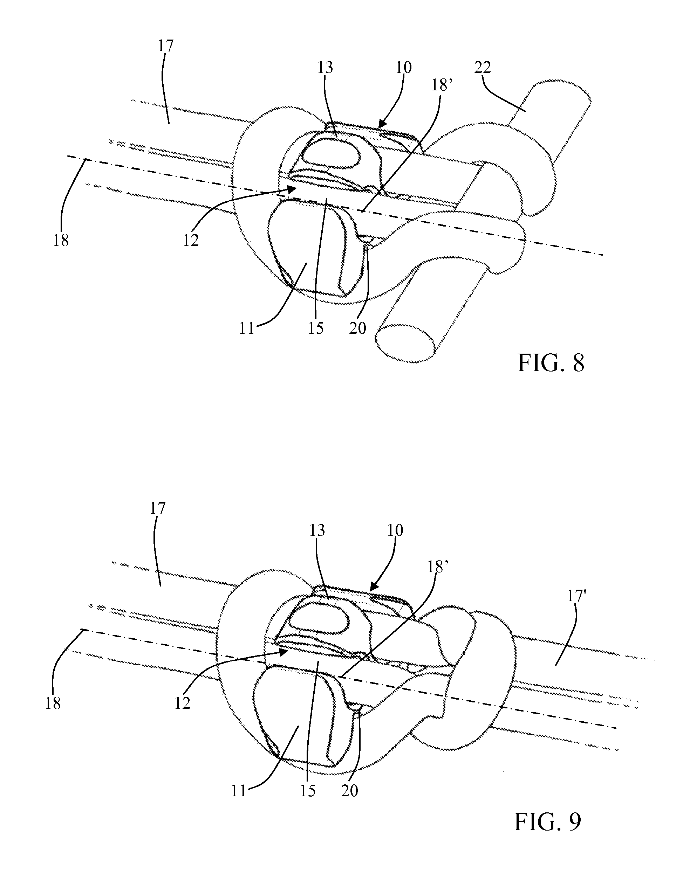

Lorsque l'élément de verrouillage 10 est utilisé avec une corde 17 comportant une boucle, comme cela est illustré par les figures 8 et 9, deux brins de la corde sont engagés dans les gorges 16 dans un premier sens. Dans le mode de réalisation de la figure 8, les brins passent autour de l'objet 22 à fixer, puis la corde est passée sous l'élément de verrouillage 10, dans les échancrures 20 dans un deuxième sens et la boucle est positionnée au-dessus des brins. La corde est maintenue sur la seconde face 14 de l'élément de verrouillage, dans les échancrures.

Dans le mode de réalisation de la figure 9, les brins de la corde 17 sont passés dans les gorges 16, dans un premier sens. Une seconde corde 17' ou une autre partie de la même corde s'il s'agit d'un anneau textile par exemple, est passée autour de l'élément de verrouillage 10 de telle sorte que les brins de cette seconde corde prennent appui contre la seconde face 14, dans une seconde direction. Les boucles des cordes sont agencées pour être entremêlées de telle sorte qu'elles soient maintenues l'une à l'autre autour de l'élément de verrouillage. II est également possible d'utiliser plus de deux cordes, par exemple trois.

Grâce à la forme particulière des gorges 16, la corde ou le câble est maintenu en place de façon sûre, de sorte que l'élément de verrouillage ne se sépare pas involontairement de la corde.

Grâce aux échancrures 20, la corde ou le câble est également bien maintenu en place lors de l'utilisation de cet élément de verrouillage.

Les gorges et les échancrures comportes de préférence des bords chanfreinés ou rayonnés de façon à éviter tout risque de blessure à la corde.

Les gorges ont été représentées comme ayant une section transversale en forme de portion de cercle. II est toutefois clair que d'autres courbes pourraient également être utilisées. De telles courbes pourraient être notamment des ellipses, ou des segments rectilignes par exemple.

Les échancrures et les gorges ont été représentées avec des formes et des dimensions différentes. II est toutefois possible d'envisager que les échancrures aient les mêmes formes et des dimensions similaires aux gorges. Dans ce cas, l'élément de verrouillage pourrait être symétrique.

Il est clair que pour une utilisation optimale de l'élément de verrouillage selon l'invention, les dimensions des gorges et de la corde ou du câble sont à adapter. Grâce à la forme de l'élément de verrouillage, le poids et l'encombrement de la pièce sont optimisés.

## Revendications

1. Elément de verrouillage destiné à recevoir au moins une corde ou un câble prévu pour subir une traction le long d'un axe longitudinal, cet élément de verrouillage étan**t caractérisé en ce qu'**il comporte un corps (11) muni d'au moins un logement (12) agencé pour recevoir deux brins de la corde (17, 17') ou du câble selon un premier sens, ledit logement ayant un axe parallèle audit axe longitudinal, **en ce que** le logement (12) comporte une zone ouverte (15) débouchant sur une première face (13) de l'élément de verrouillage (10) de façon à permettre d'engager lesdits brins dans ledit logement (12) selon une direction perpendiculaire à l'axe du logement (18'), et **en ce qu'**il comporte au moins une seconde face (14) opposée à ladite première face (13), agencée pour recevoir deux brins de la corde (17, 17') ou du câble dans un second sens, opposé audit premier sens.

2. Elément de verrouillage selon la revendication 1, **caractérisé en ce que** le logement (12) est formé d'une gorge (16).

3. Elément de verrouillage selon la revendication 1, **caractérisé en ce que** le logement (12) est formé de deux gorges (16), chacune de ces gorges étant agencée pour recevoir un brin de la corde (17, 17') ou du câble.

4. Elément de verrouillage selon la revendication 2 ou 3, **caractérisé en ce que** la gorge (16) a au moins une partie ayant une section transversale formant une portion de cercle.

5. Elément de verrouillage selon la revendication 2 ou 3, **caractérisé en ce que** la largeur de la zone ouverte (15) de la gorge (16) débouchant sur la première face (13) de l'élément de verrouillage (10) est inférieure à la largeur maximale de la gorge (16).

6. Elément de verrouillage selon la revendication 1, **caractérisé en ce que** ladite seconde face (14) de l'élément de verrouillage (10) comporte au moins une zone concave (21).

7. Elément de verrouillage selon la revendication 1, **caractérisé en ce que** ladite seconde face (14) de l'élément de verrouillage (10) comporte deux échancrures (20) parallèles audit axe du logement (18').

8. Elément de verrouillage selon la revendication 1, **caractérisé en ce que** la zone ouverte (15) du logement (12) est associée à un élément de fermeture (19).

9. Elément de verrouillage selon la revendication 8, **caractérisé en ce que** l'élément de fermeture (19) est formé d'une matière élastique.
